(19) **Europäisches Patentamt**

**European Patent Office**

**Office européen des brevets**

(11) Veröffentlichungsnummer: **0 290 890 B1**

(12) **EUROPÄISCHE PATENTSCHRIFT**

(45) Veröffentlichungstag der Patentschrift: **04.03.92**

(21) Anmeldenummer: **88106927.2**

(22) Anmeldetag: **29.04.88**

(51) Int. Cl.⁵: **H02P 7/62**

(54) Verfahren und Vorrichtung zur digitalen Bestimmung des Feldwinkels einer Drehfeldmaschine.

(30) Priorität: **12.05.87 DE 3715854**

(43) Veröffentlichungstag der Anmeldung:
**17.11.88 Patentblatt 88/46**

(45) Bekanntmachung des Hinweises auf die
Patenterteilung:
**04.03.92 Patentblatt 92/10**

(84) Benannte Vertragsstaaten:
**CH DE FR GB IT LI SE**

(56) Entgegenhaltungen:
**EP-A- 0 007 550      EP-A- 0 047 893**
**EP-A- 0 075 794      EP-A- 0 127 158**
**EP-A- 0 161 615      EP-A- 0 161 616**

**SIEMENS FORSCHUNGS- UND ENTWICK-
LUNGSBERICHTE, Band 3, Nr. 5, 1974, Seiten
327-332, Springer-Verlag, DE; F. BLASCHKE
et al.: "A new method of regulation for rotating field machines"**

(73) Patentinhaber: **SIEMENS AKTIENGESELL-
SCHAFT
Wittelsbacherplatz 2
W-8000 München 2(DE)**

(72) Erfinder: **Schlegel, Thomas, Dipl.-Ing.
Dr-Georg-Dassler-Strasse 36
W-8551 Hemhofen(DE)**
Erfinder: **Reng, Leonhard, Dipl.-Ing.
Dr.-Wölfel-Strasse 4
W-8522 Herzogenaurach(DE)**

**Beschreibung**

Die Erfindung betrifft ein Verfahren zur Bestimmung des momentanen Feldwinkels einer Drehfeldmaschine durch Berechnung des EMK-Vektors aus Werten für Strom und Spannung des Maschinenständers und Integration, sowie eine hier für geeignete Vorrichtung.

Im Inneren einer Drehfeldmaschine (Synchronmaschine oder Asynchronmaschine) findet entsprechend deren physikalischer Struktur eine Gegenkopplung des Feldwinkels in dem Sinne statt, daß das Feld der Maschine im stationären Fall proportional der feldparallelen Komponente des Ständerstromvektors und das Drehmoment (Physikalisch: Das Vektorprodukt aus Feldvektor und Stromvektor) bei konstantem Feld proportional der feldsenkrechten Komponente des Ständerstromvektors ist. Die einzelnen Wicklungsströme des Ständers, deren Amplitude, Frequenz und Phasenlage von einem Stromrichter eingeprägt werden können, können also als Projektionen eines in einem ständerorientierten Koordinatensystem vorgegebenen Ständerstromvektors aufgefaßt werden, aus denen durch eine Transformation in ein mit dem Feldvektor rotierendes Koordinatensystem die feldorientierten Vektorkomponenten entstehen, die Feld und Moment bestimmen. Werden die Steuergrößen des Stromrichters daher aus einem feldorientierten Soll-Vektor für die Maschinenströme berechnet und dieser feldorientierte Soll-Vektor durch eine geeignete Transformation, die einer Mitkopplung mit dem Winkel des Feldvektors bezüglich des Ständers ("Feldwinkel") darstellt, ins ständerorientierte Koordinatensystem transformiert, so kann dadurch eine hochdynamische Regelung von Moment und Fluß erreicht werden.

Dies ist z.B. in "Siemens Forschungs- und Entwicklungs-Berichte 3 (1974), Seiten 327 bis 332 beschrieben, wobei angegeben ist, daß der Feldwinkel in erster Näherung der um 90° phasenverschobene Winkel des Ständerspannungsvektors ist. In "msr" 18 ap (1975), Heft 12, Seiten 278 bis 280 sind eine Reihe weiterer Verfahren zur Erfassung des Feldwinkels angegeben. Sofern keine Hall-Sonden zur direkten Felderfassung verwendet werden, werden dabei Maschinenmodelle verwendet, die aus den physikalischen Gleichungen und jeweils unterschiedlichen Meßgrößen das Feld errechnen. Rechenungenauigkeiten sowie eine fehlerhafte Einstellung der Maschinenparameter im Rechenmodell führen jedoch zu ungenauen Werten des erfaßten Feldes. Für unterschiedliche Betriebszustände können daher unterschiedliche Modelle vorteilhaft sein.

Unterdessen sind noch weitere Modelle sowie auch Kombinationen von Modellen vorgeschlagen worden. So ist z.B. in der DE-OS 30 34 252 (VPA 80 P 3167 DE) vorgeschlagen worden, einen EMK-Detektor zu verwenden, der aus Meßwerten der Ständerströme und der Ständerspannung den EMK-Vektor errechnet. Im stationären Fall ist der Flußbetrag proportional dem Quotient aus Betrag und Frequenz des EMK-Vektors, während die Richtung des EMK-Vektors gegenüber der Feldrichtung um 90° phasenverschoben ist. Auch für den dynamischen Fall exakter ist die Bestimmung des Feldvektors als Integral des EMK-Vektors, wobei aber der Flußvektor auch auf andere Weise, z.B. aus Strom und Läuferstellung unter Nachbildung der Felderregung im Läufer, berechnet werden kann. Da beide Flußvektoren bei exakter Vorgabe der Maschinenparameter (für die EMK-Berechnung: Der Parameter für den Ständerwiderstand und die Streuinduktivität) übereinstimmen müssen, ist vorgeschlagen, aus der Abweichung der beiden im Modell errechneten Flußvektoren oder EMK-Vektoren eine Regelabweichung zu bilden, die von einem Korrekturregler dadurch ausgeregelt wird, daß die entsprechenden Maschinenparameter von dem Korrekturregler-Ausgangssignal korrigiert werden.

Ein derartiger Modellabgleich bedingt somit für das den Feldwinkel liefernde Modell eine Rückführungsschleife, die eine komplexe Struktur und zeitaufwendige Regelungen erfordert. Dies ist insbesondere dann störend, wenn Wechselgrößen verarbeitet und ausgeregelt werden müssen.

Ein besonderes Problem stellen hierbei Gleichanteile in den erfaßten Istwerten dar. So können z.B. die Meßwerte von Strom und Spannung aufgrund der Ungenauigkeiten von Meßwandlern bereits Gleichanteile aufweisen, so daß der von dem erwähnten EMK-Detektor aus dem Spannungsvektor nach Abzug der ohmschen und induktiven Spannungsabfälle gebildete EMK-Vektor kein im stationären Fall mit konstantem Betrag gleichmäßig rotierender Vektor mehr ist. Werden die ständerorientierten Komponenten des Feldvektors durch Integration aus den entsprechenden EMK-Komponenten errechnet, so können Offset-Fehler und andere Rechenfehler der verwendeten Integratoren zu weiteren, sich ständig aufintegrierenden Fehlern führen, so daß das verwendete Modell nicht mehr stabil arbeitet.

Aus der DE-OS 34 18 573 (VPA 84 P 3181 DE) ist ein Verfahren bekannt, bei dem einerseits Gleichanteile in den Meßfehlern bereits durch eine "schwache" Glättung (d.h. eine Glättung mit einer Zeitkonstanten, die groß ist gegenüber den Perioden der Meßwerte) unterdrückt werden, andererseits der EMK-Vektor bereits vor seiner Integration durch ein Korrektursignal korrigiert wird, das von einer "flüchtigen Größe" ausgeht. Eine "flüchtige Größe" ist eine physikalische Größe der Maschine, die im stationären Zustand den Wert Null annimmt; der im fehlerhaften Modell errechnete Modellwert dieser flüchtigen Größe

2

weicht jedoch vom Wert Null ab. Dieser fehlerhafte Modellwert bestimmt den Betrag eines Korrekturvektors. Die Richtung dieses Korrekturvektors wird ermittelt, indem die Richtung des fehlerhaft ermittelten Modell-Flußvektors um einen vorgegebenen Winkel gedreht wird. In der Regel weicht zumindest die zum fehlerhaften Modellvektor senkrechte Komponente des Modellvektors von Null ab; die vektorielle Addition des Korrekturvektors zum EMK-Vektor erfordert daher wenigstens eine Additionsstelle für die Addition dieser Komponente.

Die Integration der ständerorientierten Komponenten des EMK-Vektors erfordert zwei Wechselspannungsintegratoren, die bei Realisierung durch einen digitalen Mikrorechner nur ein begrenztes Auflösungsvermögen besitzen. In der DE-OS 34 18 640 (VPA 84 P 3182 DE) ist vorgeschlagen, den EMK-Vektor mittels eines Vektordrehers in ein rotierendes Koordinatensystem zu transformieren und anschließend zu integrieren. Bei der Integration eines Vektors in einem rotierenden Koordinatensystem muß eine rotatorische Komponente berücksichtigt werden, so daß die transformierten EMK-Komponenten sowohl mit dem erwähnten Korrektursignal und mit der rotatorischen Komponente zu dem Eingangsvektor einer entsprechenden Integrationsschaltung zusammengesetzt werden. Ist das rotierende Koordinatensystem phasenstarr an den Feldvektor gekoppelt, so ist der Betrag des tatsächlichen Feldvektors stets identisch mit seiner feldparallelen Orthogonalkomponente und die feldsenkrechte Orthogonalkomponente hat den Wert Null. Daher wird am Ausgang der Integrationsschaltung die entsprechende senkrechte Komponente des integrierten Vektors einem Nullpunktregler zugeführt, dessen Ausgangssignal die Rotationsfrequenz des Koordinantensystems darstellt und nach einer weiteren Integration den Transformationswinkel für den Vektordreher liefert.

Die entsprechende Schaltung enthält somit eine weitere Regelschleife zur Bildung des Transformationswinkels, jedoch sind sowohl die Rotationsfrequenz wie auch die transformierten Komponenten des EMK-Vektors, das Korrektursignal und die rotatorischen EMK-Komponenten nunmehr Gleichspannungssignale, die sich im Mikrorechner leichter integrieren lassen.

In der DE-OS 34 18 641 (VPA 84 P 3183 DE) ist eine Schaltung zur Integration des EMK-Vektors angegeben, die ebenfalls den EMK-Vektor (nach Unterdrückung von Gleichanteilen) mittels eines Vektordrehers in ein rotierendes Koordinatensystem transformiert, aber für die Bildung des Flußvektors insgesamt mit zwei Integratoren und ohne eine rotatorische EMK-Komponente und einen eigenen Regler Transformationswinkel auskommt. Vielmehr wird der Betrag des Feldvektors durch Integration der einen transformierten und korrigierten EMK-Komponente gebildet, während ein Dividierer aus dem Quotienten der anderen EMK-Komponente und des Feldvektor-Betrages unmittelbar die Feldfrequenz liefert, aus der der zweite Integrator den Transformationswinkel bestimmt. Der Transformationswinkel ist dann identisch mit dem Feldwinkel und die Transformationsfrequenz identisch mit der Feldfrequenz.

Der auf diese Weise ermittelte Feldwinkel wird für die Phasensteuerung des Ständerstromes benötigt, um die rechtzeitige Zündung der Ventile des speisenden Stromrichters in Abhängigkeit vom Feldwinkel sicherzustellen. Daher muß eine entsprechende Vorrichtung zur Felderfassung den momentanen Feldwinkel als stetigen oder wenigstens quasi-stetigen Istwert mit einer hohen Winkelauflösung (möglichst nur Bruchteile eines Grades) zur Verfügung stellen. Andererseits werden bei vielen Anwendungen Frequenzen der Wicklungsströme gefordert, die bis zu 100 Hz betragen können. Dies bedingt, daß der momentane Feldwinkel mit einer derart hohen Taktfrequenz an einer Felderfassungseinrichtung abgelesen werden muß, daß eine digitale Feldwinkelerfassung nicht realisierbar erscheint.

Der Erfindung liegt daher die Aufgabe zugrunde, aus der Vielzahl der bekannten Feldwinkelerfassungen ein im Hinblick auf eine Digitalisierung mit hoher zeitlicher Auflösung geeignetes Verfahren auszuwählen und dieses Verfahren mit möglichst wenig Rechneraufwand und unter geeigneter Wahl der Schnittstellen zwischen den erforderlichen Rechnerbausteinen durchzuführen.

Diese Aufgabe wird gelöst durch ein Verfahren mit den Merkmalen des Anspruchs 1 oder des Anspruchs 7.

Eine hierfür geeignete Vorrichtung besitzt die Merkmale des Anspruchs 11 oder 13. Vorteilhafte Weiterbildungen der Erfindung sind in den Unteransprüchen angegeben und werden anhand von vier Figuren näher erläutert.

Es zeigen:

FIG 1 das Prinzip des Leistungsteils und der Steuerung am Beispiel einer über einen Zwischenkreis-Umrichter gespeisten Synchronmaschine,

FIG 2 die Steuerung eines maschinenseitigen Stromrichters im Prinzip,

FIG 3 die Erfassung des Feldwinkels für hohe Frequenzen und die Schnittstelle zwischen einem programmgesteuerten Mikrorechner und einem in Hardware realisierten Integrator,

FIG 4 die gleiche Felderfassung für niedrigere Frequenzen.

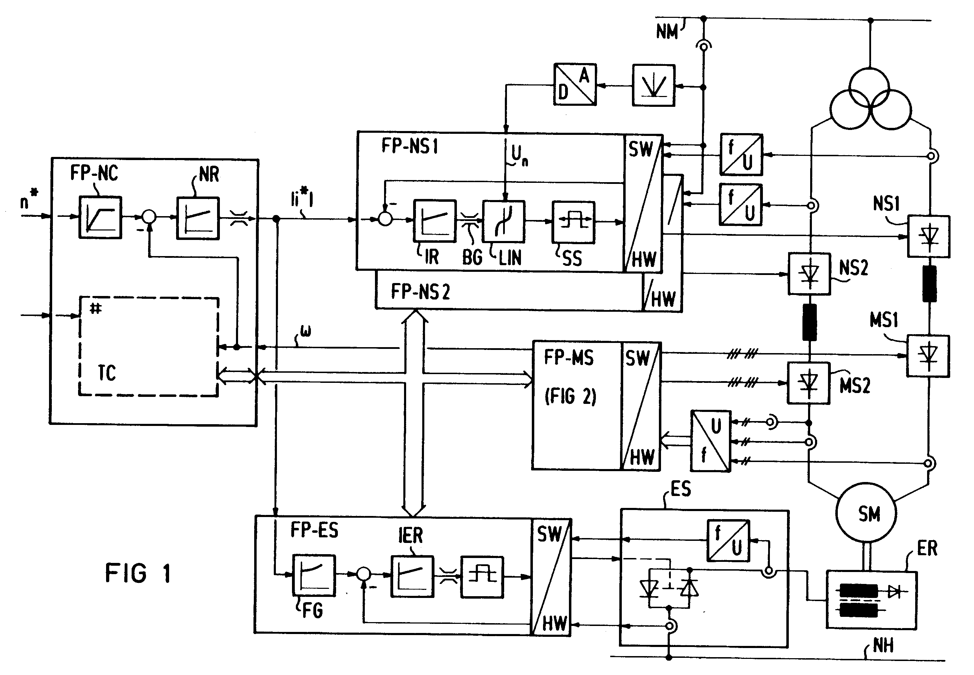

In FIG 1 ist die Verwendung der erfindungsgemäßen Feldwinkelbestimmung zur Einprägung des Ständerstromes am Beispiel einer Synchronmaschine dargestellt. Die Synchronmaschine SM enthält zwei gegeneinander versetzte Wicklungssysteme, die jeweils über einen Zwischenkreis-Umrichter gespeist werden. Jeder Zwischenkreis-Umrichter besteht aus einem maschinenseitigen Stromrichter (MS1 bzw. MS2), der über eine Zwischenkreisdrossel von einem über einen Transformator an ein Haupt-Versorgungsnetz NM angeschlossenen netzseitigen Stromrichter (NS1 bzw. NS2) mit einem regelbaren Zwischenkreis-Gleichstrom gespeist wird. Die Läuferwicklung wird von einer rotierenden Erregereinrichtung ER gespeist, die über einen erregerseitigen Stromrichter ES an ein Hilfs-Versorgungsnetz NH angeschlossen ist.

Die Regelung der Maschine und die Steuerung der Stromrichter erfolgen digital und sind in mehrere Funktionspakete aufgeteilt, die einzelnen Prozessor-Moduln zugeordnet sind: nämlich die Funktionspakete FP-NS1 und FP-NS2 zur Steuerung der netzseitigen Stromrichter, das Funktionspaket FP-MS zur Steuerung der maschinenseitigen Stromrichter und das Funktionspaket FP-ES zur Steuerung des erregerseitigen Stromrichters. Ein universeller Prozessor-Modul FP-NC übernimmt einerseits ein Funktionspaket für die Drehzahlregelung sowie ein Funktionspaket für die Ablaufsteuerung des gesamten Verfahrens. Schließlich sind - teilweise im Leistungteil des Umrichters, teilweise auf einem Interface-Modul angeordnet - Peripherie-Bauteile, wie Meßwertgeber und Umformer, den einzelnen Prozessor-Moduln zugeordnet.

Die beiden Prozessor-Moduln mit den Funktionspaketen FP-NS1 und FP-NS2 sind identisch aufgebaut und haben die Aufgabe, die Zündimpulse für die Ventile der netzseitigen Stromrichter NS1 und NS2 zu bilden, um durch Phasenanschnittsteuerung den in den jeweiligen Gleichstrom-Zwischenkreis eingespeisten Strom und damit die Amplitude der den Ständerwicklungen zuzuführenden Ströme auf einen vom Modul FP-NC gelieferten, dem Soll-Drehmoment entsprechenden Wert zu regeln. Die Interface-Electronic enthält zu diesem Zweck Spannungs/Frequenz-Umformer zur Erfassung des Stromistwertes, einen Gleichrichter mit nachfolgender Analog/Digital-Wandlung zur Bildung der Netzspannung sowie andere zum Betrieb des Netzrichters vorgesehene Bauteile, wie z.B. eine (nicht dargestellte) Hardware-Schaltung, um den Nulldurchgang des Stromes festzustellen. Die Frequenz/Digital-Wandlung der Stromistwerte erfolgt in der Hardware (HW) des Moduls, dessen Software-Funktionen in FIG 1 schematisch dargestellt sind. Dabei liefert ein Stromregler IR einen von einem Begrenzer BG auf zulässige Werte begrenzten Spannungs-Sollwert $Ud^*$, der in einer Linearisierungsstufe LIN unter Berücksichtigung der Netzspannung $U_n$ in den Steuerwinkel $\alpha$ = arc cos $(U_d^*/U_n)$ umgerechnet wird. Ein Steuersatz SS, der auf den Meßwert der momentanen Netzspannung synchronisiert ist, stellt die Zündimpulse für die Stromrichterventile zur Verfügung.

Der Prozessormodul mit dem Funktionspaket FP-ES liefert in Abhängigkeit vom Stromsollwert $i^*$ mittels eines Funktionsgenerators FG den Erregerstromsollwert für den Erregerstrom-Regler IER, dessen (ebenfalls begrenztes) Ausgangssignal in einem Steuersatz die Steuersignale für den erregerseitigen Stromrichter ES liefert. Hardware-Bauteile zur Spannungs/Frequenz-Umwandlung des Erregerstrom-Istwertes im Stromrichter ES sowie entsprechende Hardware am Prozessor-Modul zur Frequenz/Digital-Wandlung des Stromistwertes sind auch hier vorgesehen.

Diese Prozessor-Moduln bilden ferner, wie auch der Prozessor-Modul mit dem Funktionspaket FP-MS nach der Erfindung, geeignete Überwachungsgrößen, Quittierungs- und Rückmeldesignale, die in den Prozessor-Modul FP-NC eingespeist werden, während dieser Modul seinerseits Start- und Freigabesignale an die Funktions-Moduln der Stromrichter liefert.

Gesondert ist in FIG 1 dargestellt, daß der Modul FP-MS die Feldfrequenz $\omega$ als Drehzahl-Ersatzistwert einem Software-Baustein NR zur Drehzahlregelung übergibt, von dem der Strom-Sollwert $i^*$ gebildet wird. Der Drehzahl-Istwert wird von einem Hochlaufgenerator HG aus einem Sollwert $n^*$ gebildet, der vom Betreiber eingegeben wird. Die Ablaufsteuerung TC erhält ebenfalls vom Betreiber ihre Start- und Stoppbefehle, ferner kann hier der Betreiber die der jeweiligen Maschine angepaßten Parameterwerte für die Steuerung, für die Auswahl der Betriebsart und andere Daten eingeben. Die Ablaufsteuerung stellt damit die Schnittstelle zwischen den vom Anwender einzugebenden Daten und der vom Hersteller gelieferten Steuerung und Regelung dar. Ferner können dort auch besondere Betriebsgrößen, z.B. Drehzahl, Spannung, Fluß, EMK auf die Einhaltung vorgegebener Betriebsbereiche überwacht werden, um gegebenenfalls ein geordnetes Abschalten bei unzulässigen Werten einzuleiten.

Für das Funktionspaket FP-MS werden an den Zuleitungen jedes Ständerwicklungssystems zwei Phasenströme ($i_{R1}$, $i_{S1}$ bzw. $i_{R2}$, $i_{S2}$) sowie wenigstens zwei verkettete Spannungen eines Ständerwicklungssystems gemessen und über einen Spannungs/Frequenz-Wandler dem entsprechenden Prozessor-Modul zur Verfügung gestellt, der daraus die digitalen Meßwerte bildet.

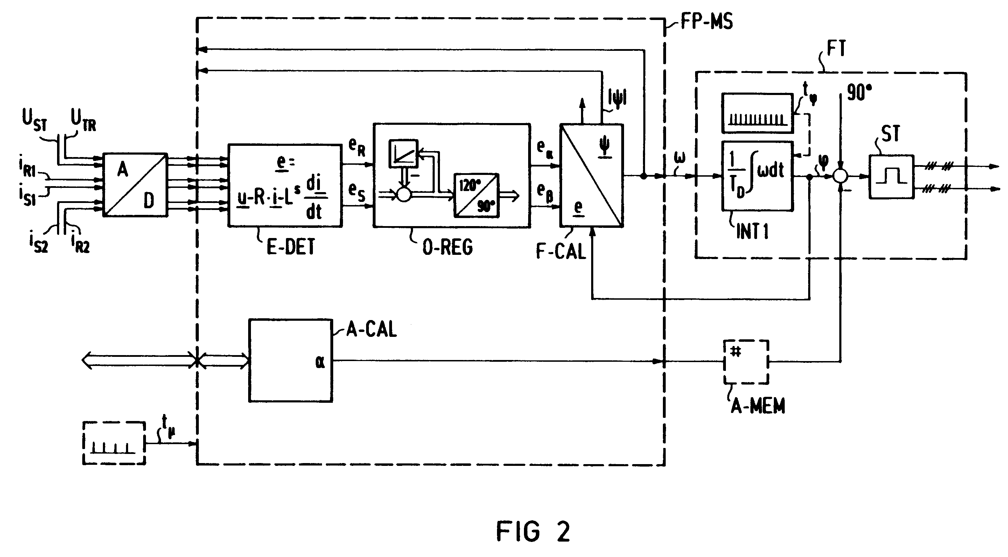

In FIG 2 ist die Funktion dieses Prozessor-Moduls näher dargestellt, wobei die Analog/Digital-Wandlung, die nicht Gegenstand der Erfindung ist, getrennt vom Rechengang des Prozessors dargestellt ist. Die gesamte Steuerung der maschinenseitigen Stromrichter erfolgt dabei durch einen Rechenmodul, der aus dem eigentlichen Prozessor FP-MS und einem hardwaremäßig getrennten Triggermodul FT besteht. Im Prozessor FP-MS findet zunächst eine Stromwinkel-Berechnung A-CAL statt, um den Steuerwinkel $\alpha$, d.h. den Winkel zwischen dem einzuprägenden Ständerstromvektor und dem EMK-Vektor festzulegen. Dieser Steuerwinkel kann dabei wahlweise nach verschiedenen parametrierbaren Strategien berechnet werden, z.B. Betrieb mit festem Leistungsfaktor, mit minimalem Löschwinkel oder einem durch die feldorientierte Regelung vorgegebenen Winkel gegenüber dem Flußvektor. Die Ablaufsteuerung TC legt dabei die Auswahl der anzuwendenden Strategie fest. Im einfachsten Fall wird ein konstanter Steuerwinkel vorgegeben, um den Ständerstrom im vorgegebenen Zündzyklus der maschinenseitigen Stromrichterventile jeweils dann auf die nächste Wicklung zu kommutieren, wenn der EMK-Vektor bzw. der Flußvektor eine vorgegebene räumliche Lage erreicht.

Der Steuerwinkel $\alpha$ kann vorteilhaft in einem eigenen Hardware-Speicher A-MEM zwischengespeichert werden, um auch bei einem Ausfall des Prozessor-Moduls FP-MS noch für einen gesteuerten Wechselrichterbetrieb zur Verfügung zu stehen. Der Triggermodul FT enthält eine Vergleichsstelle, um den Steuerwinkel $\alpha$ mit dem (entsprechend der Phasenverschiebung zwischen EMK-Vektor und Feldvektor um $90°$ phasenverschobenen) Feldwinkel zu vergleichen. Bei Gleichheit bildet eine nachfolgende Steuerstufe ST unmittelbar die Zündzeitpunkte, mit denen nach der für einen Umlauf des Stromvektors festgelegten Zündfolge die Ventile der maschinenseitigen Stromrichter gezündet werden.

Der Triggerbaustein FT benötigt somit den Momentanwert des Feldwinkels $\phi$, der für eine exakte Steuerung mit einer hohen zeitlichen Auflösung, also quasi-kontinuierlich vorliegen muß. Die digitale Bildung dieses Feldwinkels mit hoher Auflösung ist Gegenstand der vorliegenden Erfindung.

Hierzu wird ein Verfahren benutzt, das den EMK-Vektor aus den (digital bereitgestellten) Werten für Strom und Spannung des Maschinenständers berechnet und daraus den momentanen Feldwinkel bestimmt, wobei mindestens eine Integration vorgenommen wird.

Erfindungsgemäß wird in einem Mikroprozessor ein sich in einem langsameren Takt ("diskontinuierlich") ändernder Wert $\omega$ für die Frequenz des EMK-Vektors berechnet und an einem außerhalb des Mikroprozessors angeordneten, von dem diskontinuierlichen Wert $\omega$ gesteuerten Integrator wird ein sich in einem schnelleren Takt ändernder Wert als quasi-kontinuierliches Winkelsignal abgelesen.

Die Erfindung geht dabei davon aus, daß sich aufgrund der Trägheiten der Maschine der Flußvektor und die Drehgeschwindigkeit des Läufers nur relativ langsam ändern. Es genügt daher, wenn in einen Mikroprozessor die Strom- und Spannungswerte in einem der Rechenkapazität des Prozessors angepaßten, langsameren Takt synchron eingelesen werden und der Prozessor in einer EMK-Detektorstufe E-DET denjenigen EMK-Vektor e bildet, der zum Zeitpunkt $t_\mu$ des Einlesens vorliegt. Eine Fluß-Berechnungsstufe F-CAL bestimmt dabei die Frequenz $\omega$, die sich aus der Bewegung des zu den jeweiligen Einlesezeitpunkten ergebende EMK-Vektor oder des diesem EMK-Vektor entsprechenden Flußvektors ergibt. Diese Frequenz $\omega$ ist somit ein sich in dem langsameren Einlesetakt ("diskontinuierlich") ändernder Frequenzwert, aus dem aber durch Integration ein Feldwinkel gebildet werden kann, der sich bei Verwendung eines Analog-Integrators kontinuierlich oder bei Verwendung eines in einem hohen Arbeitstakt arbeitenden Integrators INT1 quasi-kontinuierlich ändert.

Da der Integrand dieses Integrators während der Periode der Einlesezeiten $t_\mu$ nur unwesentlich von der wahren Flußfrequenz abweicht, weisen die zu den Taktimpulsen $t_\phi$ des von dem Rechentakt-Geber des Integrators INT1 vorgegebenen Werts des Integrals (Winkelsignal $\phi$) nur unwesentlich vom wahren Feldwinkel ab. Diese Abweichung kann ausgeregelt werden, indem das Winkelsignal $\phi$ ebenfalls nur in einem langsamen Takt in den Mikroprozessor rückgeführt wird.

Vorteilhaft erfolgt das Einlesen des rückgeführten Winkelsignals synchron mit dem Einlesen der Strom- und Spannungswerte, d.h. alle eingelesenen Werte sind zu den gleichen Zeitpunkten $t_\mu$ gehörende Momentanwerte, so daß dadurch keine zusätzlichen Phasenverschiebungen entstehen. Im Mikroprozessor kann dann die Frequenz so nachgeregelt werden, daß für die Einlesezeitpunkte $t_\mu$ Gleichheit zwischen dem Winkelsignal und dem im Flußrechner F-CAL zu diesen Einlesezeiten diskontinuierlich gebildeten Feldwinkel erreicht wird (Synchronisierung). Da die rückkoppelnde Wirkung des Winkelsignals bei steigenden Frequenzen anwächst, andererseits die Flußrechnung bei hohen Frequenzen immer genauer wird, kann u.U. auf die Synchronisierung vollständig verzichtet werden oder jedenfalls der zur Synchronisierung vorgesehene Korrekturregler mit einer großen Zeitkonstanten versehen werden.

Ebene Vektoren müssen durch zwei Bestimmungsgrößen beschrieben werden. Für den Hardware-Integrator INT1 ist allerdings von dem berechneten Flußvektor nur die zeitliche Ableitung $\omega$ der polaren Winkelkoordinate des zu den Taktzeiten $t_\mu$ errechneten Flußvektors erforderlich. Lediglich für Zwecke der Überwachung ist in FIG 2 vorgesehen, an der Rechenstufe F-CAL auch den Betrag $\psi$ des Flußvektors $\underline{\psi}$ zusammen mit der Frequenz $\omega$ aus dem Mikroprozessor herauszuführen und in die Ablaufsteuerung rückzuspeisen.

Zur Beschreibung des EMK-Vektors e werden gemäß FIG 2 vorteilhaft die orthogonalen kartesischen Komponenten $e_\alpha$ und $e_\beta$ des EMK-Vektors in einem ständerbezogenen Koordinatensystem verwendet. Die für die EMK-Berechnung benötigten Ströme und Spannungen in einem Ständerwicklungssystem fließen allerdings in Wicklungen, die gegeneinander um 120˚ versetzt sind. Es ist daher eine Koordinatentransformation von schiefwinkligen, den drei Einzelwicklungen eines Ständerwicklungssystems zugeordneten Koordinaten in orthogonale Koordinaten erforderlich, die als "3/2-Wandlung" oder "120˚/90˚-Wandlung" bekannt ist. An welcher Stelle im Eingangskanal der Rechenstufe F-CAL diese Wandlung erfolgt, ist gleichgültig, insbesondere kann diese Wandlung bereits auf die Meßwerte der Ständerströme und Ständerspannungen angewendet werden, so daß dem EMK-Detektor E-DET bereits orthogonale Komponenten des Stromvektors und des Spannungsvektors zugeführt werden können.

In FIG 2 ist vorgesehen, diese Wandlung am Ausgang einer Offset-Reglerstufe O-REG vorzunehmen. Diese Reglerstufe ist vor allem dann vorteilhaft, wenn durch Offset-Fehler der vorgeschalteten Hardware (Meßglieder und Analog/Digital-Wandler) die Komponenten des EMK-Vektors, die an sich reine Wechselspannungsgrößen sind, einen Gleichanteil aufweisen. Für die Offset-Regelung genügt dabei nur eine sehr schwache Glättung, also z.B. mittels eines rückkoppelnden Integrators, dessen Zeitkonstante groß ist gegenüber der Periode der Ablesezeitpunkte $t_\mu$, wie im Funktionsblock O-REG der FIG 2 angedeutet ist.

Für die EMK-Erfassung genügt es auch bei einer Maschine mit mehreren Ständerwicklungssystemen, den EMK-Vektor in einem einzigen Wicklungssystem zu berechnen, indem vom Spannungsvektor $\underline{u}$ dieses Wicklungssystems der dem ohmschen Widerstand R des Speisekreises und dem Stromvektor $\underline{i}$ entsprechende ohmsche Spannungsabfall R . i sowie der zur Streuinduktivität $L^s$ entsprechende induktive Spannungsabfall $L^s$ . (di/dt) abgezogen wird. Allerdings sind die einzelnen Ständerwicklungssysteme induktiv miteinander verkoppelt, so daß auch entsprechend einem Kopplungsfaktor x die zu den Ständerstromvektoren der anderen Wicklungssysteme gehörenden induktiven Spannungsabfälle berücksichtigt werden müssen. Für das vom maschinenseitigen Stromrichter MS2 gespeiste Wicklungssystem (Spannungsvektor $\underline{U}_2$, Stromvektor $\underline{i}_2$) ergibt sich somit die Vektorgleichung

$$\underline{e} = \underline{u}_2 - R . \underline{i}_2 - L^s (\underline{di}_2/dt + x . \underline{di}_1/dt)$$

Im Beispiel der FIG 2 wird diese Vektorgleichung in Form zweier skalarer Gleichungen für die schiefwinkligen Komponenten der Vektoren errechnet.

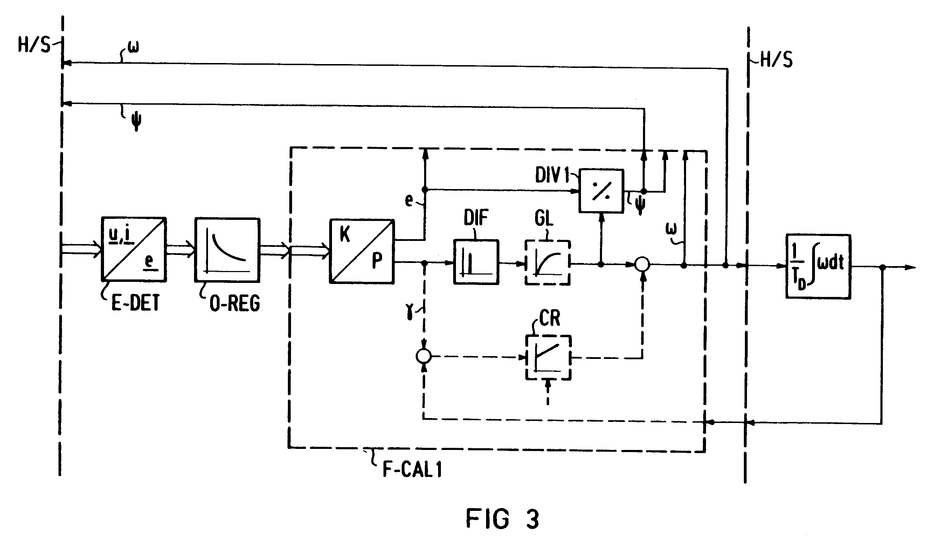

In FIG 3 ist die Struktur der Flußberechnung für den Fall hoher Frequenzen als Blockschaltbild F-CAL1 dargestellt. Die gestrichelten Linien H/S geben dabei die Schnittstelle zwischen dem software-gesteuerten Mikroprozessor und der Hardware an seinem Eingang und Ausgang an. Vektoren, die durch zwei ihrer Bestimmungsgrößen (gemäß FIG 3 vorteilhaft die kartesischen - schiefwinkligen oder orthogonalen - Komponenten) entsprechende Signale dargestellt werden, sind als Doppelpfeil angegeben, wobei die Struktur des EMK-Detektors E-DET sowie des Offset-Reglers O-REG entsprechend FIG 2 gewählt sein kann. Ein kartesisch/polarer Wandler K-P bildet daraus die polaren Bestimmungsgrößen, im Fall orthogonaler EMK-Komponenten $e_\alpha$, $e_\beta$ also das Betragssignal

$$e = \sqrt{e_\alpha{}^2 + e_\beta{}^2}$$

und das sich diskontinuierlich ändernde Winkelsignal

$$\gamma = \text{arc tan } (e_\beta/e_\alpha).$$

Die Frequenz $\omega$ des EMK-Vektors wird mittels eines digitalen Differenzierers DIF softwaremäßig gebildet, der den Differentialquotienten durch den Differenzenquotienten

$$\frac{d\gamma}{dt} = TD \left(\frac{\gamma_\mu - \gamma_{\mu-1}}{T_\mu}\right) = \omega$$

berechnet, wobei $\gamma_\mu$ und $\gamma_{\mu-1}$ die polaren Winkelkoordinaten des zu den Ablesezeitpunkten $t_\mu$ und $t_{\mu-1}$ gehörenden EMK-Vektors, $T_\mu$ die Periode der Ablesezeitpunkte und $T_D$ eine auf die Zeitkonstante des Hardware-Integrators INT1 abgestimmte, der Nennfrequenz entsprechende Zeit-Normierungskonstante ist. Ein Dividierer DIV1 bildet daraus den Quotienten e/$\omega$ als Betrag $\psi$ des errechneten Flusses. Dabei wird ausgenutzt, daß der Flußvektor physikalisch das Integral des EMK-Vektors ist, die Integration jedoch bei

EP 0 290 890 B1

hohen Frequenzen ersetzt werden kann, indem die Betragskomponente des Flußvektors durch e/ω und die Winkelkoordinate durch γ + 90° ersetzt wird.

Im stationären Zustand ist diese näherungsweise Bestimmung des Flußvektors, die ohne Integration allein mit der Bestimmung des EMK-Betrages und der EMK-Frequenz auskommt, exakt und verändert nur die Dynamik. In vielen Anwendungsfällen, insbesondere bei Asynchronmaschinen, sind selbst Rechenfehler, wie sie z.B. durch Rundungsfehler der Differenzierstufe DIF entstehen, ohne weiteres tolerierbar. In anderen Fällen kann es aber vorteilhaft sein, der Differenzierstufe DIV ein weiteres Glättungsglied GL nachzuschalten. Dadurch wird allerdings ein frequenzabhängiger Phasenfehler erzeugt.

Dieser Phasenfehler kann dadurch ausgeglichen werden, daß der jeweils zu den Ablesezeitpunkten $t_\mu$ gehörende Winkel γ mit dem zu diesen Zeitpunkten gehörenden Winkel $\phi$ synchronisiert wird. Dazu ist der Korrekturregler CR vorgesehen, dem die Winkeldifferenz zugeführt ist und dessen Ausgangssignal dem Ausgangssignal des Glättungsgliedes GL aufgeschaltet werden kann.

Da das Einlesen von Strom, Spannung und Winkelsignal synchron verläuft, ist bei abgeglichenem Korrekturregler CR zu diesen Synchronzeitpunkten Identität zwischen dem diskontinuierlich berechneten Winkel γ und dem quasi-kontinuierlich berechneten Winkelsignal $\phi$ sichergestellt. Der Hardware-Integrator INT1 dient somit als Interpolator für die diskontinuierlich berechneten γ-Werte. Hierbei wird im Mikroprozessor die Differenzierstufe DIF benötigt.

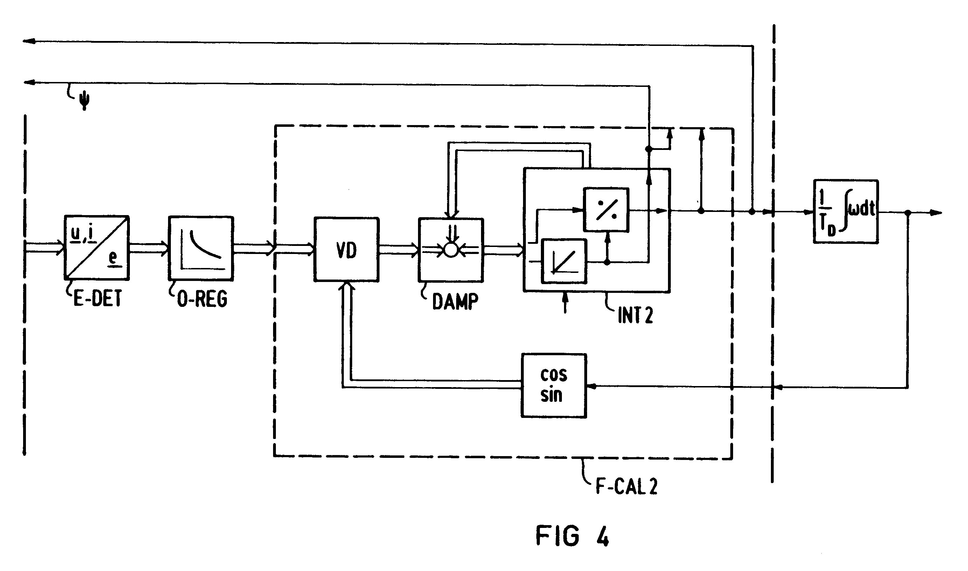

Bei niedrigeren Frequenzen ist es häufig vorteilhaft, für die Flußberechnung eine Struktur zu verwenden, bei der tatsächlich eine Integration des EMK-Vektors, aber keine Differentiation zur Bildung der Frequenz ω vorgenommen wird. Im Mikroprozessor braucht hierzu lediglich bei einem bestimmten Grenzwert der Frequenz ω auf ein anderes Program für die Flußberechnung z.B. das Programm F-CAL2 der FIG 4, umgeschaltet zu werden. Sofern bei dieser neuen Flußberechnung die Startwerte von Integratoren oder anderen Rechenelementen benötigt werden, können die nach dem alten Programm errechneten Werte für den Fluß $\psi$, die EMK e und die Frequenz ω in das neue Programm aus dem alten Programm übernommen werden, wie in FIG 3 durch entsprechende Ausgänge des Programmteils F-CAL1 angedeutet ist. Umgekehrt können beim Rückschalten auf den Programmteil F-CAL1 ein entsprechender Startwert für die Differenzier-Stufe DIF sowie der Wert Null für den Korrekturregler CR vorgegeben werden.

Beim Umschalten entstehen keine weiteren Zeitprobleme, da der Hardware-Integrator INT1 ohne weiteres für einen oder mehrere zur Berechnung des diskontinuierlichen Frequenzwertes ω erforderliche Rechenzyklen unsynchronisiert laufen kann.

Gemäß FIG 4 benutzt auch das Verfahren zur Bestimmung des momentanen Feldwinkels bei niedrigeren Frequenzen eine Berechnung des EMK-Vektors (Programmteil E-DET), der eine Offset-Regelstufe O-REG nachgeschaltet sein kann. Der Programmteil F-CAL2 enthält dabei mindestens eine Integrationsstufe INT2, die zu dem Hardware-Integrator INT1 zusätzlich hinzukommt.

Bei diesem Verfahren werden in den Mikroprozessor im langsameren Takt ebenfalls die Werte für Ständerstrom und Ständerspannung sowie ein rückgeführter Wert $\phi$ für den Feldwinkel synchron eingelesen. Aus ihnen werden intern die ständerbezogenen Komponenten $e_\alpha$, $e_\beta$ des EMK-Vektors und daraus mittels einer ersten Integration ein sich im langsameren Takt diskontinuierlich ändernder Wert ω für die Frequenz des Flußvektors (integrierten EMK-Vektors) berechnet. Dieser diskontinuierliche Wert wird im Hardware-Integrator INT1 zu einem sich schneller ändernden Winkelsignal $\phi$ für den Feldwinkel integriert ("zweite Integration") und das Winkelsignal wird einerseits als Wert des momentanen Feldwinkels abgegriffen, andererseits als rückgeführter Wert für den Feldwinkel abgetastet.

Vorteilhaft werden im Mikroprozessor die eingelesenen Werte mittels der Offset-Reglerstufe O-REG in geglätteten ständerbezogene Orthogonalkomponenten des EMK-Vektors umgewandelt. In einer Vektordreherstufe VD werden diese Orthogonalkomponenten einer Koordinantentransformation mit dem rückgeführten Wert des Feldwinkels als Transformationswinkel unterworfen. Der Transformationswinkel wird dabei vorteilhaft in seine Winkelfunktionen cos $\phi$, sin $\phi$ überführt, da die Vektortransformation dann nur aus vier Multiplikationen und zwei Additionen besteht.

Im Gegensatz zu den ständerbezogenen Orthogonalkomponenten des EMK-Vektors, die Wechselspannungssignale darstellen, werden die transformierten Orthogonalkomponenten jetzt durch Gleichspannungssignale dargestellt, deren Integration keinen hohen Arbeitstakt erfordert.

Vorteilhaft wird in einer Dämpfungsstufe DAMP zum transformierten Vektor ein Korrekturvektor vektoriell addiert, entsprechend den anfangs erwähnten deutschen Offenlegungsschriften 34 18 573 (VPA 84 P 3181 DE), 34 18 640 (VPA 84 P 3182 DE), 34 18 641 (VPA 84 P 3183 DE) vorgesehen ist.

Diesen Schriften kann auch die Struktur geeigneter Integrationsstufen INT2 entnommen werden.

In FIG 4 ist eine in Software ausgeführte Integrationsstufe INT2 angedeutet, die nur mit einem einzigen Integrator zur Bildung des Flußbetrages $\psi$ auskommt, während der diskontinuierliche Frequenzwert ω mittels einer Divisionsstufe gebildet wird.

7

Diese Form der Integrationsstufe INT2 benötigt also keine Differenzierstufe, um aus den Komponenten des transformierten EMK-Vektors den diskontinuierlichen Wert $\omega$ zu bestimmen, der als Integrand dem Hardware-Integrator INT1 eingegeben werden muß.

**Patentansprüche**

1. Verfahren zur Bestimmung des momentanen Feldwinkels einer Drehfeldmaschine (SM) durch Berechnung des EMK-Vektors (e) aus Werten für Strom und Spannung des Maschinenständers und Integration, **dadurch gekennzeichnet**, daß in einem Mikroprozessor ein sich in einem langsameren Takt $t_\mu$ diskontinuierlich ändernder Wert ($\omega$) für die Frequenz des EMK-Vektors berechnet wird und daß aus einem außerhalb des Mikroprozessors angeordneten, von dem diskontinuierlichen Wert ($\omega$) gesteuerten Integrator (INT1) ein sich in einem schnelleren Takt ($t_\phi$) ändernder Wert ($\phi$) als quasi-kontinuierliches Winkelsignal für den Feldwinkel abgelesen wird.

2. Verfahren nach Anspruch 1, **dadurch gekennzeichnet**, daß im Mikroprozessor der sich diskontinuierlich ändernde Wert ($\omega$) der Frequenz durch digitales Differenzieren (DIF) aus dem Richtungswinkel ($\gamma$) des EMK-Vektors gebildet und durch ein Korrektursignal korrigiert wird, das durch Ausregeln (CR) der Abweichung ($\gamma$-$\phi$) des quasi-kontinuierlichen Winkelsignals ($\phi$) vom Richtungswinkel ($\gamma$) mit einer gegenüber der Frequenz des schnelleren Taktes größeren Zeitkonstante gebildet wird.

3. Verfahren nach Anspruch 2, **dadurch gekennzeichnet**, daß der durch das digitale Differenzieren gewonnene Wert der Frequenz anschließend geglättet wird.

4. Verfahren nach Anspruch 2, **dadurch gekennzeichnet**, daß die Werte für Strom und Spannung zur Bildung des EMK-Vektors und das quasi-kontinuierliche Winkelsignal zum Ausregeln der Abweichung synchron miteinander abgetastet werden.

5. Verfahren nach Anspruch 1, **dadurch gekennzeichnet**, daß im Mikroprozessor auch der Betrag (e) des EMK-Vektors gebildet und durch Division mit dem diskontinuierlichen Wert der Frequenz in einen Rechenwert ($\psi$) für den Betrag des Flusses überführt wird.

6. Verfahren nach Anspruch 1, **dadurch gekennzeichnet**, daß der EMK-Vektor in kartesischen Koordinaten unter Ausfiltern der Gleichanteile berechnet wird und daß die Frequenz des EMK-Vektors aus den gefilterten Komponenten bestimmt wird.

7. Verfahren zur Bestimmung des momentanen Feldwinkels einer Drehfeldmaschine durch Berechnung des EMK-Vektors aus Werten für Ständerstrom und Ständerspannung und mehrere Integrationen, **gekennzeichnet** durch folgende Merkmale:

   a) In einen Mikroprozessor werden in einem langsameren Takt die Werte für Ständerstrom und Ständerspannung und ein rückgeführter Wert für den Feldwinkel synchron eingelesen, aus denen ständerbezogene Komponenten des EMK-Vektors und unter einer ersten Integration ein sich im langsameren Takt diskontinuierlich ändernder Wert für die Frequenz des integrierten EMK-Vektors berechnet werden,

   b) der diskontinuierliche Wert wird mittels einer zweiten Integration außerhalb des Mikroprozessors zu einem sich schneller ändernden Winkelsignal für den Feldwinkel integriert und

   c) das Winkelsignal wird einerseits als Wert des momentanen Feldwinkels abgegriffen, andererseits als rückgeführter Wert für den Feldwinkel abgetastet.

8. Verfahren nach Anspruch 7, **dadurch gekennzeichnet**, daß im Mikroprozessor eine Umwandlung der eingelesenen Werte in geglättete ständerbezogene Orthogonalkomponenten des EMK-Vektors vorgenommen wird, diese Orthogonalkomponenten einer Koordinatentransformation mit dem rückgeführten Wert des Feldwinkels als Transformationswinkel unterworfen werden und daß aus den transformierten Orthogonalkomponenten mittels der ersten Integration der diskontinuierliche Wert der Frequenz bestimmt wird.

9. Verfahren nach Anspruch 8, **dadurch gekennzeichnet**, daß aus den Ausgangsgrößen der ersten Integration ein Korrekturvektor bestimmt wird, der vektoriell zu dem der Koordinatentransformation unterworfenen EMK-Vektor addiert wird.

10. Verfahren zur Bestimmung des momentanen Feldwinkels einer Drehfeldmaschine nach Anspruch 1 bei höheren Frequenzen und nach Anspruch 7 bei niedrigeren Frequenzen.

11. Digitale Vorrichtung zum Bestimmen des Flußwinkels einer Drehfeldmaschine mit einem von Werten für Ständerstrom ($i_{R1}$,$i_{R2}$,$i_{S1}$,$i_{S2}$) und Ständerspannung ($U_{ST}$,$U_{TR}$) gespeisten EMK-Detektor (E-DET) und einem Integrator, **gekennzeichnet** durch folgende Merkmale:

a) Der EMK-Detektor ist in einem Mikroprozessor (FP-MS) mit einem Taktgeber realisiert, der in einem langsameren Takt das Einlesen der Werte für Ständerstrom und Ständerspannung und die Ausgabe eines digitalen Wertes für die Frequenz ($\omega$) des EMK-Vektors ($\overline{e}$) steuert; und
b) der Integrator (INT1) ist außerhalb des Mikroprozessors angeordnet, vom digitalen Wert für die Frequenz ($\omega$) des EMK-Vektors gesteuert und berechnet einen sich schneller ändernden (quasi-kontinuierlichen) Wert für den Feldwinkel ($\phi$).

12. Vorrichtung nach Anspruch 10, **dadurch gekennzeichnet**, daß der sich schneller ändernde Wert auf den Mikroprozessor rückgekoppelt und mittels des Taktgebers synchron mit den Werten für Ständerstrom und Ständerspannung abtastbar ist.

13. Digitale Vorrichtung zum Bestimmen des Flußwinkels einer Drehfeldmaschine mit einem von Werten für Ständerstrom ($i_{R1}$,$i_{R2}$,$i_{S1}$,$i_{S2}$) und Ständerspannung ($U_{ST}$,$U_{TR}$) gespeisten EMK-Detektor (E-DET), einem Integrator und einer Integrationsstufe, **gekennzeichnet** durch folgende Merkmale:

a) Der EMK-Detektor ist in einem Mikroprozessor (FR-MS) mit einem Taktgeber realisiert, der in einem langsameren Takt das Einlesen der Werte für Ständerstrom und Ständerspannung und die Ausgabe eines digitalen Wertes ($\omega$) für die Frequenz des Flußvektors ($\underline{\psi}$) steuert,
b) die Integrationsstufe (INT2) ist ebenfalls im Mikroprozessor realisiert und liefert den digitalen Wert ($\omega$) für die Frequenz des Flußvektors, und
c) zwischen dem EMK-Detektor und der Integrationsstufe ist im Mikroprozessor eine Vektordreherstufe (VD) realisiert, der das im langsameren Takt abgetastete Ausgangssignal des Integrators als Transformationswinkel zugeführt ist, und
d) der Integrator (INT1) ist außerhalb des Mikrorechners angeordnet, vom digitalen Wert ($\omega$) für die Frequenz des Flußvektors gesteuert und berechnet einen sich schneller ändernden (kontinuierlichen oder quasi-kontinuierlichen) Wert für den Feldwinkel ($\phi$).

## Claims

1. Method for determining the instantaneous field angle of a rotating-field machine (SM) through calculation of the EMF vector ($\overline{e}$) from values for current and voltage of the machine stator and integration, characterized in that there is calculated in a microprocessor a value ($\omega$), changing discontinuously at a slower rate $t_{\mu}$, for the frequency of the EMF vector and in that from an integrator (INT1), arranged outside the microprocessor and controlled by the discontinuous value ($\omega$), a value ($\phi$), changing at a faster rate ($t_{\phi}$), is read as quasi-continuous angle signal for the field angle.

2. Method according to claim 1, characterized in that in the microprocessor the discontinuously changing value ($\omega$) of the frequency is formed through digital differentiation (DIF) from the direction angle ($\gamma$) of the EMF vector and is corrected by a correction signal, which is formed by controlling (CR) the deviation ($\gamma-\phi$) of the quasi-continuous angle signal ($\phi$) from the direction angle ($\gamma$) with a time constant which is greater relative to the frequency of the faster rate.

3. Method according to claim 2, characterized in that the value of the frequency obtained through the digital differentiation is subsequently smoothed.

4. Method according to claim 2, characterized in that the values for current and voltage for the formation of the EMF vector and the quasi-continuous angle signal for controlling the deviation are sampled synchronously with one another.

9

**5.** Method according to claim 1, characterized in that in the microprocessor the magnitude (e) of the EMF vector is also formed and by division with the discontinuous value of the frequency is transformed into a computed value ($\psi$) for the magnitude of the flux.

**6.** Method according to claim 1, characterized in that the EMF vector is calculated in Cartesian coordinates while filtering out the direct components and in that the frequency of the EMF vector is determined from the filtered components.

**7.** Method for determining the instantaneous field angle of a rotating-field machine through calculation of the EMF vector from values for stator current and stator voltage and several integrations, characterized by the following features:
   a) the values for stator current and stator voltage and a returned value for the field angle are synchronously read into a microprocessor at a slower rate, from which stator-related components of the EMF vector and, during a first integration, a value for the frequency of the integrated EMF vector, which value is discontinuously changing at the slower rate, are calculated,
   b) the discontinuous value is integrated by means of a second integration outside the microprocessor to a faster-changing angle signal for the field angle and
   c) the angle signal on the one hand is picked up as value of the instantaneous field angle, on the other hand is sampled as returned value for the field angle.

**8.** Method according to claim 7, characterized in that in the microprocessor a conversion of the read-in values into smoothed statorrelated orthogonal components of the EMF vector is undertaken, these orthogonal components are subjected to a coordinate transformation with the returned value of the field angle as transformation angle and in that from the transformed orthogonal components by means of the first integration the discontinuous value of the frequency is determined.

**9.** Method according to claim 8, characterized in that from the output quantities of the first integration a correction vector is determined, which is vectorially added to the EMF vector subjected to the coordinate transformation.

**10.** Method for determining the instantaneous field angle of a rotating-field machine according to claim 1 at higher frequencies and according to claim 7 at lower frequencies.

**11.** Digital device for determining the flux angle of a rotating-field machine with an EMF detector (E-DET), fed by values for stator current ($i_{R1}, i_{R2}, i_{S1}, i_{S2}$) and stator voltage ($U_{ST}, U_{TR}$), and an integrator, characterized by the following features:
   a) the EMF detector is realized in a microprocessor (FP-MS) with a clock generator which controls at a slower rate the reading-in of the values for stator current and stator voltage and the output of a digital value for the frequency ($\omega$) of the EMF vector ($\underline{e}$); and
   b) the integrator (INT1) is arranged outside the microprocessor, is controlled by the digital value for the frequency ($\omega$) of the EMF vector and calculates a faster-changing (quasi-continuous) value for the field angle ($\phi$).

**12.** Device according to claim 10, characterized in that the faster-changing value is fed back to the microprocessor and can be sampled by means of the clock generator synchronously with the values for stator current and stator voltage.

**13.** Digital device for determining the flux angle of a rotating-field machine with an EMF detector (E-DET), fed by values for stator current ($i_{R1}, i_{R2}, i_{S1}, i_{S2}$) and stator voltage ($U_{ST}, U_{TR}$), an integrator and an integration stage, characterized by the following features:
   a) the EMF detector is realized in a microprocessor (FR-MS) with a clock generator, which controls at a slower rate the reading-in of the values for stator current and stator voltage and the output of a digital value ($\omega$) for the frequency of the flux vector ($\underline{\psi}$)
   b) the integration stage (INT2) is likewise realized in the microprocessor and supplies the digital value ($\omega$) for the frequency of the flux vector, and
   c) between the EMF detector and the integration stage in the microprocessor a vector rotator stage (VD) is realized, to which there is supplied as transformation angle the output signal of the integrator, sampled at the slower rate, and

EP 0 290 890 B1

d) the integrator (INT1) is arranged outside the microcomputer, is controlled by the digital value ($\omega$) for the frequency of the flux vector and calculates a faster-changing (continuous or quasi-continuous) value for the field angle ($\phi$).

## Revendications

1.  Procédé pour déterminer l'angle instantané de champ d'une machine à induction (SM) au moyen du calcul du vecteur force électromotrice (e) à partir de valeurs du courant et de la tension du stator de la machine et par intégration, caractérisé par le fait qu'une valeur ($\omega$), qui varie de façon discontinue à une cadence assez lente $t_\omega$, est calculée pour la fréquence du vecteur force électromotrice dans un microprocesseur et qu'une valeur ($\phi$), qui varie avec une cadence plus rapide ($t_\phi$), est lue en tant que signal angulaire quasiment continu pour l'angle de champ, à partir d'un intégrateur (INT1) disposé à l'extérieur du microprocesseur et commandé par la valeur discontinue ($\omega$).

2.  Procédé suivant la revendication 1, caractérisé par le fait que dans le microprocesseur, la valeur ($\omega$), qui varie continûment, de la fréquence est formée par différentiation numérique (DIF) à partir de l'angle de direction ($\gamma$) du vecteur force électromotrice et est corrigée par un signal de correction, qui est formé par élimination par réglage (CR) de l'écart ($\gamma$-$\phi$) entre le signal angulaire quasiment continu ($\phi$) et l'angle de direction ($\gamma$), avec une constante de temps supérieure à la fréquence de la cadence la plus rapide.

3.  Procédé suivant la revendication 2, caractérisé par le fait que la valeur de la fréquence, obtenue par différentiation numérique, est ensuite lissée.

4.  Procédé suivant la revendication 2, caractérisé par le fait que les valeurs du courant et de la tension pour la formation du vecteur force électromotrice et du signal angulaire quasiment continu sont échantillonnées d'une manière synchrone entre elles pour l'élimination de l'écart.

5.  Procédé suivant la revendication 1, caractérisé par le fait que dans le microprocesseur, la valeur absolue (e) du vecteur force électromotrice est également formée et est convertie, par division par une valeur discontinue de la fréquence, en une valeur de calcul ($\psi$) pour la valeur du flux.

6.  Procédé suivant la revendication 1, caractérisé par le fait que le vecteur force électromotrice est calculé en coordonnées cartésiennes moyennant l'élimination par filtrage des composantes continues et que la fréquence du vecteur force électromotrice est déterminée à partir des composantes filtrées.

7.  Procédé pour déterminer l'angle instantané de champ d'une machine à induction au moyen du calcul de vecteur force électromotrice à partir de valeurs du courant statorique et de la tension statorique et au moyen de plusieurs intégrations, caractérisé par les particularités suivantes:
    a) dans un microprocesseur sont introduites de façon synchrone, à une cadence assez lente, les valeurs pour le courant statorique et la tension statorique et une valeur renvoyée par réaction pour l'angle de champ et à partir desquelles sont calculées des composantes, rapportées au stator, du vecteur force électromotrice et, moyennant une première intégration, une valeur, qui varie d'une façon discontinue, à la cadence plus lente pour la fréquence du vecteur force électromotrice intégrée,
    b) la valeur discontinue est intégrée au moyen d'une seconde intégration à l'extérieur du microprocesseur pour former un signal angulaire variant plus rapidement pour l'angle de champ, et
    c) le signal angulaire est, d'une part, prélevé en tant que valeur de l'angle instantané de champ, et, d'autre part, est échantillonné en tant que valeur renvoyée par réaction pour l'angle de champ.

8.  Procédé suivant la revendication 7, caractérisé par le fait que dans le microprocesseur, les valeurs introduites sont converties en des composantes orthogonales lissées, rapportées au stator, du vecteur force électromotrice, que ces composantes orthogonales sont soumises à une transformation de coordonnées avec la valeur renvoyée par réaction de l'angle de champ en tant qu'angle de transformation et que la valeur discontinue de la fréquence est déterminée à partir des composantes orthogonales transformées au moyen de la première intégration.

9.  Procédé suivant la revendication 8, caractérisé par le fait qu'à partir des grandeurs de sortie de la

11

première intégration, on détermine un vecteur de correction, qui est ajouté vectoriellement au vecteur force électromotrice, soumis à la transformation de coordonnées.

10. Procédé pour déterminer l'angle instantané de champ d'une machine à induction suivant la revendication 1, pour des fréquences supérieures et conformément à la revendication 7 pour des fréquences inférieures.

11. Dispositif numérique pour déterminer l'angle de flux d'une machine à induction possédant un détecteur (E-DET) de la force électromotrice, qui est alimenté par des valeurs du courant statorique ($i_{R1}$,$i_{R2}$,$i_{S1}$,$i_{S2}$) et la tension statorique ($u_{ST}$,$u_{TR}$), et un intégrateur, caractérisé par les particularités suivantes :
a) le détecteur de la force électromotrice est réalisé dans un microprocesseur (FP-MS) au moyen d'un générateur de cadence qui commande, avec une cadence assez lente, l'introduction des valeurs pour le courant statorique et la tension statorique et la délivrance d'une valeur numérfique pour la fréquence ($\omega$) du vecteur force électromotrice ($\overline{e}$); et
b) l'intégrateur (INT1) est disposé à l'extérieur du microprocesseur, est commandé par la valeur numérique de la fréquence ($\omega$) du vecteur force électromotrice et calcule une valeur (quasiment discontinue), qui varie plus rapidement, pour l'angle de champ ($\phi$).

12. Dispositif suivant la revendication 10, caractérisé par le fait que la valeur, qui varie plus rapidement, est renvoyée par réaction au microprocesseur et peut être échantillonnée au moyen du générateur de cadence d'une manière synchrone avec les valeurs pour le courant statorique et la tension statorique.

13. Dispositif pour déterminer l'angle de flux d'une machine à induction comportant un détecteur (E-DET) de la force électromotrice, alimenté par des valeurs du courant statorique ($i_{R1}$,$i_{R2}$,$i_{S1}$,$i_{S2}$) et de la tension statorique ($U_{ST}$, $U_{TR}$), un intégrateur et un étage d'intégration, caractérisé par les particularités suivantes :
a) le détecteur de la force électromotrice est réalisé dans un microprocesseur (FR-MS) avec un générateur de cadence, qui commande, à une cadence assez lente, l'introduction des valeurs pour le courant statorique et la tension statorique et la délivrance d'une valeur numérique ($\omega$) pour la fréquence du vecteur flux ($\overline{\psi}$),
b) l'étage d'intégration (IN$\overline{T}$2) est également réalisé dans le microprocesseur et délivre la valeur numérique ($\omega$) pour la fréquence du vecteur flux, et
c) entre le détecteur de la force électromotrice et l'étage d'intégration est réalisé, dans le microprocesseur, un étage formant dispositif de rotation vectorielle (VD), auquel est envoyé, en tant qu'angle de transformation, le signal de sortie de l'intégrateur, échantillonné à la cadence plus lente, et
d) l'intégrateur (INT1) est disposé à l'intérieur du microordinateur, est commandé par la valeur numérique ($\omega$) de la fréquence du vecteur flux et calcule une valeur (continue ou quasiment continue), qui varie plus rapidement, pour l'angle de champ ($\phi$).

FIG 1

FIG 2

FIG 3

EP 0 290 890 B1

FIG 4